# EUROPEAN PATENT SPECIFICATION

(11) **EP 4 398 407 B1**
(45) Date of publication and mention of the grant of the patent: **04.03.2026**
(21) Application number: 23835717.2
(22) Date of filing: 21.06.2023
(51) Int. Cl.: H01M 50/531, H01M 50/105, H01M 50/536, H01M 50/538, H01M 50/183, H01M 50/19, H01M 50/124

(54) **POUCH-TYPE SECONDARY BATTERY HAVING PROTECTIVE FILM WITH IMPROVED ADHESION AND METHOD FOR MANUFACTURING SAME**
BEUTELARTIGE SEKUNDÄRBATTERIE MIT SCHUTZFILM MIT VERBESSERTER HAFTUNG UND VERFAHREN ZUR HERSTELLUNG DAVON
BATTERIE RECHARGEABLE DE TYPE POCHE COMPORTANT UN FILM DE PROTECTION À ADHÉRENCE AMÉLIORÉE ET SON PROCÉDÉ DE FABRICATION

(30) Priority: 04.07.2022 KR 20220082085; 06.04.2023 KR 20230045688
(43) Date of publication of application: 10.07.2024
(73) Proprietor: LG Energy Solution, Ltd., Seoul 07335 (KR)
(72) Inventor: WOO, Min Ki, Daejeon 34122 (KR); ANH, Chang Bum, Daejeon 34122 (KR); CHOI, Byung Man, Daejeon 34122 (KR); JUNG, Jea Bong, Daejeon 34122 (KR)
(74) Representative: Plasseraud IP
(86) International application number: PCT/KR2023/008585
(87) International publication number: WO 2024/010250

(56) References cited:
- KR-A- 20160 134 331
- KR-A- 20210 138 400
- KR-B1- 101 327 868
- KR-B1- 101 352 651
- KR-B1- 101 415 575
- KR-B1- 102 388 921
- US-A1- 2020 373 549

## Description

### [Technical Field]

The present invention relates to a pouch-shaped secondary battery having a protective film with improved adhesion and a method of manufacturing the same, and more particularly to a pouch-shaped secondary battery having a protective film with improved adhesion configured such that adhesion of the protective film, which is located on a weld of an electrode tab and an electrode lead, is improved, whereby it is possible to prevent the protective film from moving out of position even after an electrolyte wetting process, and a method of manufacturing the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, a battery cell has a protective film provided at the part at which an electrode tab and an electrode lead are connected to each other by welding, wherein adhesion of the protective film is lowered during an electrolyte wetting process, whereby the protective film is folded or dislocated, leading to performance degradation and defects of the protective film.

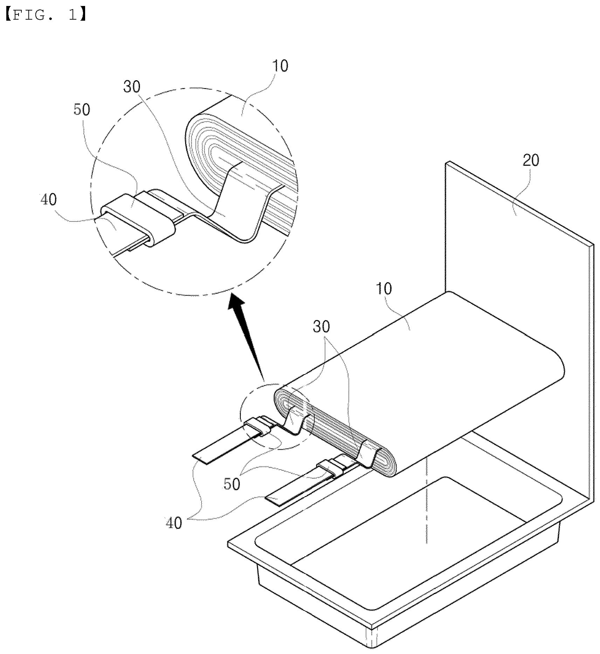

FIG. 1 is an exploded perspective view showing a conventional battery cell. As shown in FIG. 1, the conventional battery cell includes an electrode assembly 10, a case 20 configured to receive the electrode assembly 10, an electrode tab 30 extending from one side of the electrode assembly 10, an electrode lead 40 having one side connected to the electrode tab 30 and the other side protruding out of the case 20, and a ring-shaped protective film 50 configured to wrap a connection portion of the electrode tab 30 and the electrode lead 40.

In the conventional battery cell, the connection portion of the electrode tab 30 and the electrode lead 40 is wrapped with the protective film 50, which is coated with an acrylic resin adhesive, in order to protect the connection portion from impact, etc.

Since the protective film 50 is fixed by tension due to adhesion of the acrylic resin adhesive, however, the adhesion and fixation force is insufficient, whereby the electrode tab 30 and the electrode lead 40 may move in a longitudinal direction during an electrolyte wetting process, resulting in dislocation of the protective film.

### (Prior Art Document)

(Patent Document 1) Korean Patent Application Publication No. 2009-0077420

Document KR 102 388 921 B1 discloses a secondary battery comprising a protective film for the welding part of the electrode tab and electrode lead.

### [Disclosure]

### [Technical Problem]

The present invention has been made in view of the above problems, and it is an object of the present invention to provide a pouch-shaped secondary battery having a protective film with improved adhesion configured such that high adhesion of the protective film is maintained even after an electrolyte wetting process, whereby folding or displacement of the protective film is prevented, and a method of manufacturing the same.

### [Technical Solution]

In order to accomplish the above object, a pouch-shaped secondary battery having a protective film with improved adhesion according to the present invention includes a case (100) configured to have a laminate sheet structure, an electrode assembly (200) received in the case (100), an electrode tab (300) extending from the electrode assembly (200), an electrode lead (400) having one side connected to the electrode tab (300) and another side protruding out of the case (100), and a protective film (500) located on an upper surface and a lower surface of a weld (W) of the electrode tab (300) and the electrode lead (400), wherein the protective film (500) includes an ethylene-vinyl acetate copolymer (EVA)-based adhesive layer (520) disposed in tight contact with the surface of the weld and a support layer (510) located on one surface of the adhesive layer (520), the support layer being made of at least one of polypropylene (PP), cast polypropylene (CPP), or polyethylene terephthalate (PET).

Also, in the pouch-shaped secondary battery according to the present invention, the support layer (510) may be made of cast polypropylene (CPP).

Also, in the pouch-shaped secondary battery according to the present invention, the support layer (510) may be made of polyethylene terephthalate (PET).

Also, in the pouch-shaped secondary battery according to the present invention, the protective film (500) may completely wrap the weld (W) while being located in an inner space that does not overlap a sealed portion of the case (100).

Also, in the pouch-shaped secondary battery according to the present invention, the thickness of the protective film (500) may be equal to or greater than the height of a bead created during welding.

Also, in the pouch-shaped secondary battery according to the present invention, the protective film (500) may be provided in a pair so as to be located on each of one surface and another surface of the weld (W).

Also, in the pouch-shaped secondary battery according to the present invention, the protective film (500) may be provided as a single member bent so as to wrap one surface and another surface of the weld (W).

In addition, a method of manufacturing a pouch-shaped secondary battery according to the present invention includes a first step of preparing an electrode assembly (200), a second step of welding an electrode tab (300) extending from the electrode assembly (200) and an electrode lead (400) to each other, a third step of locating a protective film (500) to cover a weld (W) of the electrode tab (300) and the electrode lead (400), a fourth step of hot-pressing the protective film (500), a fifth step of receiving the electrode assembly (200) in a case (100), and a sixth step of sealing an edge of the case (100), wherein the protective film (500) includes an ethylene-vinyl acetate copolymer (EVA)-based adhesive layer (520) disposed in tight contact with a surface of the weld (W) and a support layer (510) located on one surface of the adhesive layer, the support layer being made of at least one of polypropylene (PP), cast polypropylene (CPP), or polyethylene terephthalate (PET).

Also, in the method according to the present invention, the support layer (510) may be made of cast polypropylene (CPP).

Also, in the method according to the present invention, the protective film (500) may completely wrap the weld (W) in the third step, and the protective film (500) may be located in an inner space that does not overlap a sealed portion of the case (100) in the fifth step.

Also, in the method according to the present invention, the thickness of the protective film (500) is equal to or greater than the height of a bead created during welding.

Also, in the method according to the present invention, the hot pressing of the protective film in the fourth step may be performed by sequentially performing a primary hot pressing and a secondary hot pressing, and the heating temperature during the secondary hot pressing may be higher than the heating temperature during the primary hot pressing.

Also, in the method according to the present invention, the heating temperature during the secondary hot pressing may be from 100°C to 145°C.

In addition, the present invention provides a battery module including the pouch-shaped secondary battery.

### [Advantageous Effects]

As is apparent from the above description, a pouch-shaped secondary battery according to the present invention has an advantage in that an ethylene-vinyl acetate copolymer (EVA)-based adhesive is used as an adhesive layer of a protective film, whereby it is possible to maintain high adhesion of the protective film, and therefore it is possible to prevent folding or displacement of the protective film after an electrolyte wetting process.

In addition, the pouch-shaped secondary battery according to the present invention has an advantage in that the protective film with excellent adhesion is located at a weld of an electrode tab and an electrode lead, whereby it is possible to prevent poor insulation resistance which may occur when a case is interfered with by the weld of the electrode tab and the electrode lead.

### [Description of Drawings]

FIG. 1 is an exploded perspective view showing a conventional battery cell.
FIG. 2 is an exploded perspective view of a pouch-shaped secondary battery according to a first embodiment of the present invention.
FIG. 3 is a vertical sectional view of a protective film shown in FIG. 2, wherein (A) is a sectional view in direction a-a of FIG. 2 and (B) is a sectional view in direction b-b of FIG. 2.
FIG. 4 is an exploded perspective view of a pouch-shaped secondary battery according to a second embodiment of the present invention.
FIG. 5 is a flowchart illustrating a method of manufacturing the pouch-shaped secondary battery according to the first embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a pouch-shaped secondary battery having a protective film with improved adhesion according to the present invention and a method of manufacturing the same will be described with reference to the accompanying drawings.

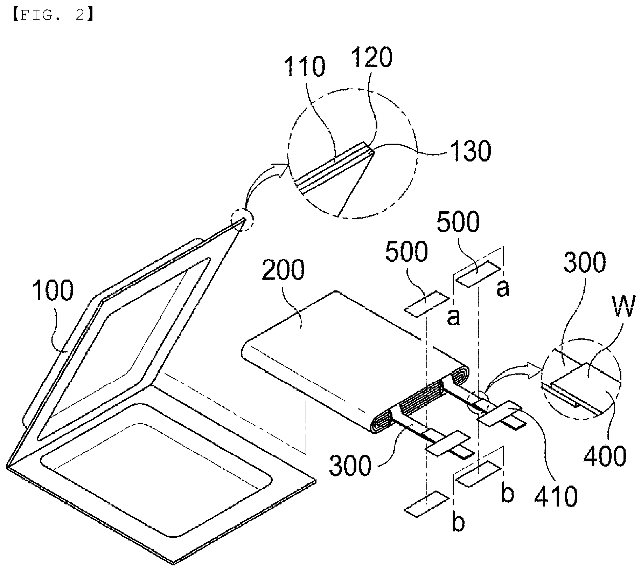

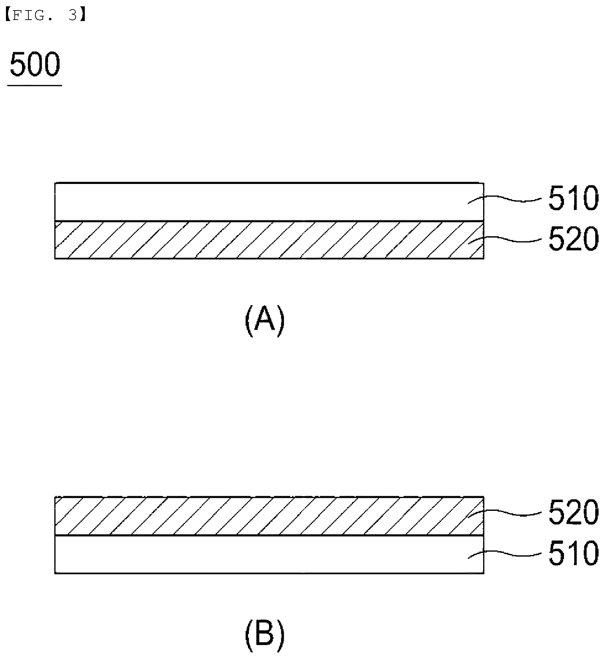

FIG. 2 is an exploded perspective view of a pouch-shaped secondary battery according to the present invention, and FIG. 3 is a vertical sectional view of a protective film according to the present invention, wherein (A) is a sectional view in direction a-a of FIG. 2 and (B) is a sectional view in direction b-b of FIG. 2.

As shown in FIGs. 2 and 3, the pouch-shaped secondary battery according to the present invention includes a case 100, an electrode assembly 200, an electrode tab 300, an electrode lead 400, and a protective film 500.

First, the case 100 may be constituted by an upper case and a lower case, and has a pocket type receiving portion configured to receive the electrode assembly 200.

A laminate sheet constituted by an outer resin layer 110, a metal layer 120, and an inner resin layer 130 is shaped to form the receiving portion of the case 100.

The outer resin layer 110 is located at an outer side of the case 100, and the outer resin layer 110 may be made of a heat-resistant polymer that exhibits excellent tensile strength, resistance to moisture permeation, and resistance to air transmission such that the outer resin layer exhibits high heat resistance and chemical resistance while protecting the electrode assembly 200. As an example, the outer resin layer may be made of nylon or polyethylene terephthalate; however, the present invention is not limited thereto.

The metal layer 120, which abuts the outer resin layer 110, corresponds to a barrier layer configured to prevent moisture or various kinds of gas from permeating into the battery from the outside. An aluminum thin film, which is lightweight and easily shapeable, may be used as a preferred material for the metal layer.

The inner resin layer 130 is disposed in direct contact with the electrode assembly 200, and therefore the inner resin layer must exhibit high insulation properties and high resistance to an electrolytic solution. In addition, the inner resin layer must exhibit high sealability in order to hermetically isolate the case from the outside, i.e. a thermally-bonded sealed portion between inner layers must exhibit excellent thermal bonding strength.

The inner resin layer 130 may be made of a material selected from among a polyolefin-based resin, such as polypropylene, cast polypropylene (CPP), polyethylene, polyethylene acrylic acid, or polybutylene, a polyurethane resin, and a polyimide resin, which exhibit excellent chemical resistance and high sealability; however, the present invention is not limited thereto, and polypropylene or cast polypropylene (CPP), which exhibits excellent mechanical properties, such as tensile strength, rigidity, surface hardness, and impact resistance, and excellent chemical resistance, is the most preferably used.

Although the receiving portion is shown as being provided in each of the upper case and the lower case in FIG. 2, the receiving portion may be provided in either the upper case or the lower case.

Next, the electrode assembly 200 will be described. The electrode assembly 200, which is seated in the receiving portion of the case 100, may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

Specifically, the negative electrode is manufactured by applying a slurry mixture of a negative electrode active material and a binder to a negative electrode current collector.

As the negative electrode active material, for example, there may be used carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof; however, the present invention is not limited thereto.

The positive electrode is manufactured by applying a slurry mixture of a positive electrode active material and a binder to a positive electrode current collector.

The positive electrode active material may be constituted, for example, by a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃; however, the present invention is not limited thereto.

Meanwhile, each of the negative electrode current collector and the positive electrode current collector is constituted by a coated portion to which the slurry including the active material is applied and an uncoated portion to which no slurry is applied. The uncoated portion is cut or a separate conductive member is connected to the uncoated portion by ultrasonic welding to form the electrode tab 300.

A pair of electrode leads 400 constituted by a positive electrode lead and a negative electrode lead is electrically connected to electrode tabs 300 constituted by a positive electrode tab and a negative electrode tab of the electrode assembly 200, respectively, and is then exposed out of the case.

Here, each of the electrode tabs 300 and a corresponding one of the electrode leads 400 may be electrically connected to each other by welding, more specifically ultrasonic welding. Coupling by ultrasonic welding is performed according to the principle by which high-frequency vibration generated by an ultrasonic wave of about 20 kHz is applied, and vibration energy is converted into thermal energy due to friction at the interface between the electrode tab and the electrode lead as the result of operation of a horn and an anvil, whereby welding is rapidly performed.

Meanwhile, after the electrode assembly 200 is received, edges of the upper case and the lower case are sealed in the state in which a part of each of the electrode leads 400 protrudes to the outside. At this time, since sealing is performed under high temperature and pressure, there is a possibility that the electrode leads 400 may be damaged, whereby electrical short circuit may occur between the electrode leads and the case 100.

In order to prevent such short circuit, therefore, it is preferable for a lead film 410 to be located on each of an upper surface and a lower surface of each of the electrode leads 400. Of course, the lead film 410 may be formed so as to cover all surfaces of the electrode lead 400. Since the lead film is provided in order to prevent damage to the electrode lead 400 and electrical short circuit between the electrode lead 400 and the case 100 during sealing, however, the lead film may be attached only to the part of the electrode lead 400 that faces the case 100.

Next, the protective film 500 will be described. The protective film 500 is disposed so as to wrap the part at which the electrode tab 300 and electrode lead 400 overlap each other, i.e. a weld W thereof.

Since the electrode tab 300 and the electrode lead 400 are connected to each other by welding, as described above, the surfaces of the electrode tab 300 and the electrode lead 400 may not be smooth. In other words, beads melted during laser welding and then solidified are generally created in a process of welding the electrode tab 300 and the electrode lead 400.

If the surface of the weld W is not smooth due to the beads, therefore, the weld W and the case 100 may come into contact with each other when external impact is applied, whereby the case 100 may be damaged, causing a problem such as poor insulation, but the aforementioned problems may be overcome because the protective film 500 wraps the weld W.

The protective film 500 according to the present invention may include a support layer 510 and an adhesive layer 520. The protective film 500 is located on each of an upper surface and a lower surface of the weld W in order to completely wrap the same.

Of course, it is preferable for the protective film 500 to be located in an inner space that does not overlap a sealed portion of the case 100.

Here, the support layer 510 may be made of an insulating material. As an example, it is preferable for the support layer to be made of polypropylene (PP), cast polypropylene (CPP), or polyethylene terephthalate (PET) .

In particular, when the support layer 510 is made of cast polypropylene (CPP) or polypropylene (PP), which is the same material as the inner resin layer 130, there is an advantage in that adhesion is not lowered due to the same material even through the support layer unintentionally slightly deviates from the attachment position thereof.

In addition, when the support layer 510 is made of polyethylene terephthalate (PET), heat pressing of the protective film may be more easily performed because the melting temperature of polyethylene terephthalate (PET) is about 160°C, which is higher than that of cast polypropylene (CPP).

It is preferable for the adhesive layer 520, which is provided on one surface of the support layer 510, i.e. the surface of the support layer that faces the weld W, to be made of a material that exhibits adhesion when heat is applied at a certain temperature or higher, more preferably an ethylene-vinyl acetate copolymer (EVA)-based adhesive.

Since the ethylene-vinyl acetate copolymer (EVA)-based adhesive starts to melt at a temperature of about 80°C or higher, excellent adhesion may be secured by heating and pressing the support layer 510 in the state in which the support layer is located on each of the upper surface and the lower surface of the weld W so as to face the same.

Conventionally, the adhesive layer is made of an acrylic-based adhesive. Since the acrylic-based adhesive is pressed at room temperature to impart adhesion, joints are separated from each other during an electrolyte wetting process due to relatively low adhesion thereof, resulting in folding or misplacement. In a severe case, the acrylic-based adhesive is separated from the weld W, leading to poor quality or product defects.

Since the ethylene-vinyl acetate copolymer (EVA)-based adhesive is used, however, it is possible for the support layer 510 of the present invention to exhibit excellent adhesion as the result of performing an adhesion process under heating and pressing conditions, whereby it is possible to greatly reduce the frequency of occurrence of the above-described problems.

Meanwhile, it is preferable for the thickness of the protective film 500 to be equal to or slightly greater than the height of the beads in order to avoid exposing the beads. For example, when the height of the beads at the weld W is 110 µm or less, it is preferable for the thickness of the protective film 500 to be at least 110 µm.

Here, the thickness of each of the support layer 510 and the adhesive layer 520 is not particularly limited within the thickness range of the protective film 500. For example, when the thickness of the protective film 500 is 110 µm, the thickness of the support layer 510 and the thickness of the adhesive layer 520 may be 90 µm and 20 µm, respectively. Alternatively, the thickness of the support layer and the thickness of the adhesive layer may be 80 µm and 30 µm, respectively.

As the power of the secondary battery increases, the thicknesses of the electrode lead and the electrode tab and the height of the beads created during the welding process may also increase, the thickness of the protective film 500 may be changed.

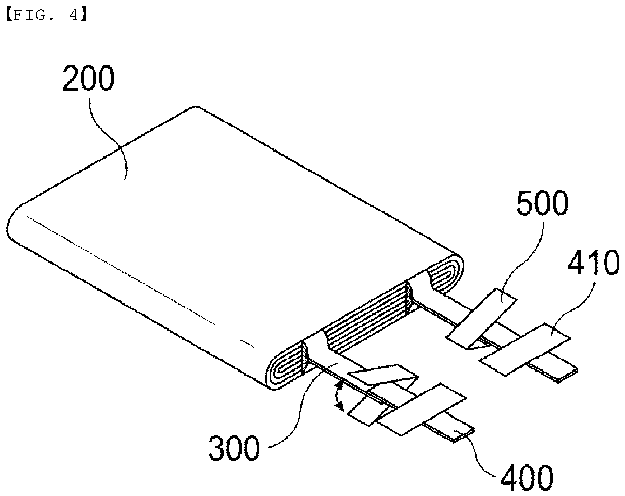

FIG. 4 is an exploded perspective view of a pouch-shaped secondary battery according to a second embodiment of the present invention. The second embodiment is identical in other configurations to the first embodiment described with reference to FIGs. 2 and 3 except for the outer shape of the protective film 500.

That is, the protective film 500 of the pouch-shaped secondary battery according to the second embodiment of the present invention is a single protective film 500, which is folded so as to be located on the upper surface and the lower surface of the weld W. Of course, it is obvious that the adhesive layers 520 of the protective film 500 face each other so as to be directed to the weld W.

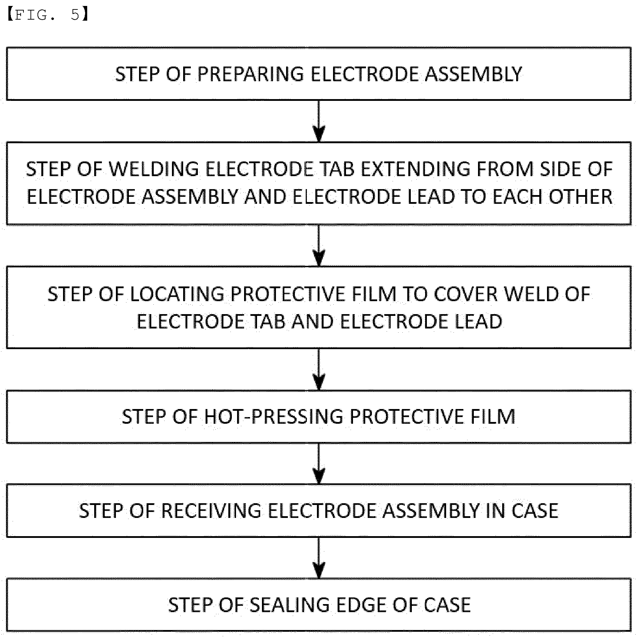

FIG. 5 is a flowchart illustrating a method of manufacturing the pouch-shaped secondary battery according to the first embodiment of the present invention.

Referring to FIG. 5, the method of manufacturing the pouch-shaped secondary battery according to the first embodiment of the present invention includes a first step of preparing an electrode assembly 200, a second step of welding an electrode tab 300 extending from the side of the electrode assembly 200 and an electrode lead 400 to each other, a third step of locating a protective film 500 to cover a weld W of the electrode tab 300 and the electrode lead 400, a fourth step of hot-pressing the protective film 500, a fifth step of receiving the electrode assembly 200 in a case 100, and a sixth step of sealing an edge of the case.

The first step of preparing an electrode assembly 200 is a step of preparing an electrode assembly 200 including at least one positive electrode, at least one negative electrode, and at least one separator, which are stacked, and having an electrode tab 300 extending from the outside.

The second step of welding the electrode tab 300 extending from the electrode assembly 200 and an electrode lead 400 to each other is a step of overlapping a part of the electrode tab 300 and a part of electrode lead 400 and electrically connecting and fixing the same using a known joining means, such as laser welding or resistance welding.

The third step of locating a protective film 500 to cover a weld W of the electrode tab 300 and electrode lead 400 is a step of locating a pair of protective films 500 on an upper surface and a lower surface of the weld W, respectively, and bringing the same into tight contact with each other.

The fourth step of hot-pressing the protective film 500 is a step of applying heat and pressure to the protective film 500 to melt a part of an adhesive layer 520 of the protective film 500 such that the pair of protective films 500 located on the upper surface and the lower surface of the weld W can be securely adhered to each other. Of course, the adhesive layer 520 is coupled to the weld W at the part at which the protective film 500 and the weld W overlap each other, and the adhesive layers 520 located above and below are coupled to each other at the part at which the protective film 500 does not overlap the weld W.

Here, the hot-pressing step is preferably performed in two steps, i.e. secondary hot pressing is preferably performed after primary hot pressing, and the secondary hot pressing is more preferably performed at a higher heating temperature than the primary hot pressing. For example, the primary hot pressing is performed at 80 to 90°C and 2 to 5kgf/cm² for 2 to 4 seconds, and the secondary hot pressing is performed at 100 to 160°C and 2 to 5kgf/cm² for 2 to 4 seconds.

The primary hot-pressing step is a step of melting the adhesive layer 520 to fix an approximate position of the protective film 500 and to temporarily adhere the protective film, and the secondary hot-pressing step is a step of applying heat and pressure once more to the protective film 500 temporarily adhered in the primary hot-pressing step to increase the fixation force of the protective film 500.

An adhesive of a conventional weld protective film is a material that exhibits adhesion at room temperature, whereby the adhesive is always sticky. When the protective film is cut or located on the weld W, the protective film is not exactly adhered to a desired position in many cases.

In contrast, the adhesive layer 520 of the present invention has no adhesion until heat is applied thereto, and therefore the adhesive layer may be exactly located at a desired position. In addition, the adhesive layer may be cut to a predetermined size and storage of the adhesive layer is very convenient.

The fifth step of receiving the electrode assembly 200 in a case 100 is a step of receiving the electrode assembly 200 in a receiving portion of the case 100 in the state in which the protective film 500 is fixed to the upper surface and the lower surface of the weld W in tight contact therewith. At this time, it is preferable for the protective film 500 to be located in an inner space that does not overlap a sealed portion of the case 100.

The sixth step of sealing an edge of the case is a step of pressing two or three sides of the edge of the case 100 at a predetermined temperature and pressure. Subsequently, a process of injecting an electrolytic solution and an activation process are performed. These processes are the same as the process of manufacturing the pouch-shaped secondary battery, and therefore a detailed description thereof will be omitted.

In addition, the present invention provides a battery module including the pouch-shaped secondary battery and a battery pack including the battery module.

Hereinafter, examples of the present invention and comparative examples will be described. The following examples and comparative examples are provided by way of example to facilitate understanding of the present invention and are not intended to limit the technical scope of the present invention.

### Example 1

A two-layered protective film constituted by an adhesive layer and a protective layer was prepared and located so as to wrap a weld of a negative electrode lead made of nickel and a negative electrode tab made of copper.

Subsequently, hot pressing was performed at 130°C and 5kgf/cm² for 3 seconds.

Here, an EVA resin composition obtained by mixing 100 parts by weight of an EVA resin and 18 parts by weight of a crosslinking agent was used as the adhesive layer, wherein the EVA resin had a content of 18 parts by weight of vinyl acetate (VA) and a melt flow index (MFI) of 15 g/10 min (measured for a load of 2.16 kg at 190°C), and di-tert-butyl peroxide having a 1-hour half-life temperature (crosslinking reaction temperature) between 135 and 150°C, which is dialkyl peroxide, was used as the crosslinking agent.

Cast polypropylene (CPP) having a tensile strength of 4.5 kgf/mm² (machine direction, MD) when measured according to ASTM D882 and an elongation of 750% (machine direction, MD) when measured according to ASTM D882 was used as the protective layer.

Meanwhile, beads of the weld were distributed in a range of 36 to 91 µm, and the thicknesses of the adhesive layer and the protective layer were 20 µm and 100 µm, respectively, for a total thickness of 120 µm.

### Example 2

Example 2 is identical in other configurations to Example 1 except that the thicknesses of the adhesive layer and the protective layer were changed to 50 µm and 100 µm, respectively, for a total thickness of 150 µm. Meanwhile, beads of the weld were distributed in a range of 44 to 103 µm.

### Example 3

A two-layered protective film constituted by an adhesive layer and a protective layer was fixed to a weld of a positive electrode lead made of aluminum and a positive electrode tab made of aluminum. At this time, beads of the weld were distributed in a range of 48 to 108 µm, and Example 3 is identical in other configurations to Example 1.

### Example 4

A two-layered protective film constituted by an adhesive layer and a protective layer was fixed to a weld of a positive electrode lead made of aluminum and a positive electrode tab made of aluminum. At this time, beads of the weld were distributed in a range of 39 to 110 µm, and Example 4 is identical in other configurations to Example 2.

### Example 5

Example 5 is identical in other configurations to Example 1 except that beads of a weld were distributed in a range of 45 to 100 µm.

### Example 6

Example 6 is identical in other configurations to Example 2 except that beads of a weld were distributed in a range of 39 to 89 µm.

### Example 7

Example 7 is identical in other configurations to Example 3 except that beads of a weld were distributed in a range of 41 to 99 µm.

### Example 8

Example 8 is identical in other configurations to Example 4 except that beads of a weld were distributed in a range of 54 to 108 µm.

### Example 9

A two-layered protective film constituted by same adhesive layer (EVA) and protective layer (CPP) as in Example 1 was located so as to wrap a weld of a positive electrode lead made of aluminum and a positive electrode tab made of aluminum.

Subsequently, hot pressing was performed at 130°C and 5kgf/cm² for 3 seconds.

Meanwhile, beads of the weld were distributed in a range of 48 to 110 µm, and the thicknesses of the adhesive layer and the protective layer were 50 µm and 100 µm, respectively, for a total thickness of 150 µm.

### Example 10

A two-layered protective film constituted by an adhesive layer and a protective layer was located so as to wrap a weld of a positive electrode lead made of aluminum and a positive electrode tab made of aluminum.

Subsequently, hot pressing was performed at 130°C and 5kgf/cm² for 3 seconds.

Here, the adhesive layer is the same as in Example 1, polyethylene terephthalate (PET) having a tensile strength of 26.6 kgf/mm² (machine direction, MD) when measured according to ASTM D882 and an elongation of 114% (machine direction, MD) when measured according to ASTM D882 was used as the protective layer.

Meanwhile, beads of the weld were distributed in an average range of 39 to 89 µm, and the thicknesses of the adhesive layer and the protective layer were 50 µm and 100 µm, respectively, for a total thickness of 150 µm.

### Comparative Example 1

A two-layered protective film constituted by an adhesive layer made of an acrylic-based material and a protective layer made of cast polypropylene was prepared and located so as to wrap a weld of a negative electrode lead made of nickel and a negative electrode tab made of copper. Subsequently, pressing was performed at 120°C and 5kgf/cm² for 3 seconds.

Meanwhile, the thicknesses of the adhesive layer and the protective layer were 10 µm and 100 µm, respectively, for a total thickness of 110 µm, and beads of the weld were distributed in a range of 38 to 87 µm.

### Comparative Example 2

Comparative Example 2 is identical in other configurations to Comparative Example 1 except that a two-layered protective film constituted by the same acrylic and cast polypropylene as in Comparative Example 1 was fixed to a weld of a positive electrode lead made of aluminum and a positive electrode tab made of aluminum and beads of the weld were distributed in a range of 49 to 98 µm.

### Comparative Example 3

Comparative Example 3 is identical in other configurations to Comparative Example 1 except that beads of a weld were distributed in a range of 36 to 89 µm.

### Comparative Example 4

Comparative Example 4 is identical in other configurations to Comparative Example 2 except that beads of a weld were distributed in a range of 58 to 100 µm.

### Comparative Example 5

Comparative Example 5 is identical in other configurations to Comparative Example 2 except that beads of a weld were distributed in a range of 61 to 110 µm.

**[Table 1]**

| | | | | | | |
|---|---|---|---|---|---|---|
| | Adhesive layer | Thickness | Protective layer | | Bead height | Electrode |
| | Material | | Material | Thickness | | |
| Example 1 | EVA | 20 | CPP | 100 | 36 - 91 µm | Negative electrode |
| Example 2 | EVA | 50 | CPP | 100 | 44 - 103 µm | Negative electrode |
| Example 3 | EVA | 20 | CPP | 100 | 48 - 108 µm | Positive electrode |
| Example 4 | EVA | 50 | CPP | 100 | 39 - 110 µm | Positive electrode |
| Example 5 | EVA | 20 | CPP | 100 | 45 - 100 µm | Negative electrode |
| Example 6 | EVA | 50 | CPP | 100 | 39 - 89 µm | Negative electrode |
| Example 7 | EVA | 20 | CPP | 100 | 41 - 99 µm | Positive electrode |
| Example 8 | EVA | 50 | CPP | 100 | 54 - 108 µm | Positive electrode |
| Example 9 | EVA | 50 | CPP | 100 | 48 - 110 µm | Positive electrode |
| Example 10 | EVA | 50 | PET | 100 | 39 - 89 µm | Positive electrode |
| Comparative Example 1 | Acrylic | 10 | CPP | 100 | 38 - 87 µm | Negative electrode |
| Comparative Example 2 | Acrylic | 10 | CPP | 100 | 49 - 98µm | Positive electrode |
| Comparative Example 3 | Acrylic | 10 | CPP | 100 | 36 - 89µm | Negative electrode |
| Comparative Example 4 | Acrylic | 10 | CPP | 100 | 58 - 100 µm | Positive electrode |
| Comparative Example 5 | Acrylic | 10 | CPP | 100 | 61 - 110 µm | Positive electrode |

### Experimental Example 1

The thermal adhesive strength of each of the protective films according to Examples 1 to 10 and Comparative Examples 1 to 5 before and after electrolyte wetting was evaluated.

The thermal adhesive strength before electrolyte wetting means the thermal adhesive strength measured after a predetermined period of time in the state in which the protective film was not in contact with an electrolytic solution after the protective film was fixed to the weld, and the thermal adhesive strength after electrolyte wetting means the thermal adhesive strength measured after a predetermined period of time in the state in which the protective film was in continuous contact with the electrolytic solution after the protective film was fixed to the weld.

The electrolytic solution includes 50 to 55 volume % of ethyl methyl carbonate, 30 to 35 volume % of ethylene carbonate, 10 to 15 volume % of lithium hexafluorophosphate, 0.1 to 5 volume % of vinylene carbonate, 0.1 to 5 volume % of 1,3,2-dioxathiolane, 0.1 to 5 volume % of lithium tetrafluoroborate, and 0.1 to 5 volume % of propane sultone.

At this time, as the thermal adhesive strength, a load rising at a speed of 50 mm/min was applied using an adhesive strength tester (Instron, Universal Material Testing Machine 6800 series model) to measure the thermal adhesive strength between the negative electrode lead or the positive electrode lead and the protective film.

The results of Examples 1 to 8 and Comparative Examples 1 to 4 are shown in Table 2 below. Measurement was performed in 2 days in the state in which electrolyte wetting was not carried out and 2 days after electrolyte wetting.

**[Table 2]**

| | Before electrolyte wetting | After electrolyte wetting | Electrode |
|---|---|---|---|
| Example 1 | 389 gf/6.0 mm | 395 gf/6.0 mm | Negative electrode |
| Example 2 | 700 gf/6.0 mm | 700 gf/6.0 mm | Negative electrode |
| Example 3 | 282 gf/6.0 mm | 290 gf/6.0 mm | Positive electrode |
| Example 4 | 417 gf/6.0 mm | 390 gf/6.0 mm | Positive electrode |
| Example 5 | 263 gf/6.0 mm | 340 gf/6.0 mm | Negative electrode |
| Example 6 | 523 gf/6.0 mm | 490 gf/6.0 mm | Negative electrode |
| Example 7 | 218 gf/6.0 mm | 235 gf/6.0 mm | Positive electrode |
| Example 8 | 470 gf/6.0 mm | 493 gf/6.0 mm | Positive electrode |
| Comparative Example 1 | 95 gf/6.0 mm | 38 gf/6.0 mm | Negative electrode |
| Comparative Example 2 | 57 gf/6.0 mm | 33 gf/6.0 mm | Positive electrode |
| Comparative Example 3 | 85 gf/6.0 mm | 37 gf/6.0 mm | Negative electrode |
| Comparative Example 4 | 100 gf/6.0 mm | 35 gf/6.0 mm | Positive electrode |

As can be seen from Table 2, Comparative Examples 1 to 4 using acrylic as the adhesive layer have an adhesive strength of 57 to 100 gf/6.0 mm before electrolyte wetting and an adhesive strength of 33 to 38 gf/6.0 mm after electrolyte wetting, which is significantly lower than the adhesive strength before electrolyte wetting.

In contrast, it can be seen that Examples 1 to 8 each using the EVA adhesive layer have an adhesive strength of 218 to 700 gf/6.0 mm before electrolyte wetting, although adhesion varies depending on the height of the beads, and therefore the adhesive strength is much higher than the adhesive strength of Comparative Examples.

Also, it can be seen that an adhesive strength of 235 to 700 gf/6.0 mm is maintained even after electrolyte wetting without any particular degradation.

The results of Examples 9 and 10 and Comparative Example 5 are shown in Table 3 below. The adhesive strength before electrolyte wetting was the adhesive strength measured immediately after hot pressing, and the adhesive strength was measured at predetermined intervals after wetting.

**[Table 3]**

| | Before electrolyte wetting (gf/6.0 mm) | After electrolyte wetting (gf/6.0 mm) | | | |
|---|---|---|---|---|---|
| | | 3 days | 5 days | 7 days | 10 days |
| Example 9 | 700 | 700 | 700 | 700 | 700 |
| Example 10 | 510 | 433 | 410 | 533 | 600 |
| Comparative Example 5 | 90 | 35 | 43 | 21 | 44 |

As can be seen from Table 3, the adhesive strength of Comparative Example 5 using acrylic as the adhesive layer was lowered after wetting and was not recovered even after lapse of wetting time.

In contrast, it can be seen that the adhesive strength of each of Example 9 using EVA as the adhesive layer and CPP as the protective layer and Example 10 using EVA as the adhesive layer and PET as the protective layer was maintained regardless of wetting and was hardly affected by the wetting time.

### Example 11

Example 11 is identical in other configurations to Example 1 except that the thicknesses of the adhesive layer and the protective layer were 50 µm and 100 µm, respectively, and the adhesive layer and the protective layer were located so as to wrap a weld of a positive electrode lead and a positive electrode tab, beads of the weld being distributed in a range of 57 to 100 µm, and hot pressing was performed at 120°C.

### Example 12

Example 12 is identical in other configurations to Example 11 except that hot pressing was performed at 125°C.

### Example 13

Example 13 is identical in other configurations to Example 11 except that hot pressing was performed at 130°C.

### Example 14

Example 14 is identical in other configurations to Example 11 except that hot pressing was performed at 135°C.

### Example 15

Example 15 is identical in other configurations to Example 11 except that hot pressing was performed at 140°C.

### Example 16

Example 16 is identical in other configurations to Example 11 except that hot pressing was performed at 145°C.

### Example 17

Example 17 is identical in other configurations to Example 11 except that PET of Example 10 was used as the protective layer and the thicknesses of the adhesive layer and the protective layer were changed to 75 µm and 75 µm, respectively.

### Example 18

Example 18 is identical in other configurations to Example 17 except that hot pressing was performed at 125°C.

### Example 19

Example 19 is identical in other configurations to Example 17 except that hot pressing was performed at 130°C.

### Example 20

Example 20 is identical in other configurations to Example 17 except that hot pressing was performed at 135°C.

### Example 21

Example 21 is identical in other configurations to Example 17 except that hot pressing was performed at 140°C.

### Example 22

Example 22 is identical in other configurations to Example 17 except that hot pressing was performed at 145°C.

### Example 23

Example 23 is identical in other configurations to Example 17 except that hot pressing was performed at 150°C.

### Example 24

Example 24 is identical in other configurations to Example 17 except that hot pressing was performed at 155°C.

### Comparative Example 6

Comparative Example 6 is identical in other configurations to Example 11 except that hot pressing was performed at 150°C.

### Comparative Example 7

Comparative Example 7 is identical in other configurations to Example 11 except that hot pressing was performed at 155°C.

### Experimental Example 2

The thermal adhesive strength of each of the protective films according to Examples 11 to 24 and Comparative Examples 6 and 7 before electrolyte wetting (after 2 days) and after electrolyte wetting (after 2 days) under secondary hot pressing conditions was evaluated in the same manner as in Experimental Example 1. At this time, the shrinkage of the protective film was checked with the naked eye to determine whether the protective film was defective.

**[Table 4]**

| | Adhesive layer | Protective layer | Adhesion before | Adhesion after | Appearance |
|---|---|---|---|---|---|
| | | | wetting (gf/6.0 mm) | wetting (gf/6.0 mm) | |
| Example 11 | EVA (50 µm) | CPP (100 µm) | 215 | 250 | Good |
| Example 12 | EVA (5 µm) | CPP (100 µm) | 225 | 480 | Good |
| Example 13 | EVA (50 µm) | CPP (100 µm) | 375 | 390 | Good |
| Example 14 | EVA (50 µm) | CPP (100 µm) | 380 | 525 | Good |
| Example 15 | EVA (50 µm) | CPP (100 µm) | 700 | 700 | Good |
| Example 16 | EVA (50 µm) | CPP (100 µm) | 425 | 485 | Good |
| Example 17 | EVA (75 µm) | PET (75 µm) | 170 | 160 | Good |
| Example 18 | EVA (75 µm) | PET (75 µm) | 125 | 270 | Good |
| Example 19 | EVA (75 µm) | PET (75 µm) | 405 | 440 | Good |
| Example 20 | EVA (75 µm) | PET (75 µm) | 290 | 340 | Good |
| Example 21 | EVA (75 µm) | PET (75 µm) | 517 | 433 | Good |
| Example 22 | EVA (75 µm) | PET (75 µm) | 350 | 325 | Good |
| Example 23 | EVA (75 µm) | PET (75 µm) | 340 | 300 | Good |
| Example 24 | EVA (75 µm) | PET (75 µm) | 550 | 575 | Good |
| Comparative Example 6 | EVA (50 µm) | CPP (100 µm) | 700 | 675 | Poor |
| Comparative Example 7 | EVA (50 µm) | CPP (100 µm) | 700 | 700 | Poor |

It can be seen from Table 4 that it is preferable to maintain a heating temperature of 155°C or lower when the protective layer is PET and to maintain a heating temperature of 145°C or lower when the protective layer is CPP in order to perform the function of the protective film as well as adhesion.

### (Description of Reference Symbols)

100: Case
110: Outer resin layer
120: Metal layer
130: Inner resin layer
200: Electrode assembly
300: Electrode tab
400: Electrode lead
410: Lead film
500: Protective film
510: Support layer
520: Adhesive layer
W: Weld

## Claims

1. A pouch-shaped secondary battery comprising:
a case (100) configured to have a laminate sheet structure;
an electrode assembly (200) received in the case (100);
an electrode tab (300) extending from the electrode assembly (200);
an electrode lead (400) having one side connected to the electrode tab (300) and another side protruding out of the case (100); and
a protective film (500) located on an upper surface and a lower surface of a weld (W) of the electrode tab (300) and the electrode lead (400),
**characterized in that** the protective film (500) comprises:
an ethylene-vinyl acetate copolymer (EVA)-based adhesive layer (520) disposed in tight contact with the surface of the weld (W); and
a support layer (510) located on one surface of the adhesive layer (520), the support layer (510) being made of at least one of polypropylene (PP), cast polypropylene (CPP), or polyethylene terephthalate (PET).

2. The pouch-shaped secondary battery according to claim 1, wherein the support layer (510) is made of cast polypropylene (CPP).

3. The pouch-shaped secondary battery according to claim 1, wherein the support layer (510) is made of polyethylene terephthalate (PET).

4. The pouch-shaped secondary battery according to claim 2, wherein the protective film (500) completely wraps the weld (W) while being located in an inner space that does not overlap a sealed portion of the case (100).

5. The pouch-shaped secondary battery according to claim 4, wherein a thickness of the protective film (500) is equal to or greater than a height of a bead created during welding.

6. The pouch-shaped secondary battery according to claim 2, wherein the protective film (500) is provided in a pair so as to be located on each of one surface and another surface of the weld (W).

7. The pouch-shaped secondary battery according to claim 2, wherein the protective film (500) is provided as a single member bent so as to wrap one surface and another surface of the weld (W).

8. A method of manufacturing a pouch-shaped secondary battery, comprising:
a first step of preparing an electrode assembly (200);
a second step of welding an electrode tab (300) extending from the electrode assembly (200) and an electrode lead (400) to each other;
a third step of locating a protective film (500) to cover a weld (W) of the electrode tab (300) and the electrode lead (400);
a fourth step of hot-pressing the protective film (500);
a fifth step of receiving the electrode assembly (200) in a case (100); and
a sixth step of sealing an edge of the case (100), wherein
the protective film (500) comprises:
an ethylene-vinyl acetate copolymer (EVA)-based adhesive layer (520) disposed in tight contact with a surface of the weld (W); and
a support layer (510) located on one surface of the adhesive layer (520), the support layer being made of at least one of polypropylene (PP), cast polypropylene (CPP), or polyethylene terephthalate (PET).

9. The method according to claim 8, wherein the support layer (510) is made of cast polypropylene (CPP) .

10. The method according to claim 9, wherein
in the third step, the protective film (500) completely wraps the weld (W), and
in the fifth step, the protective film (500) is located in an inner space that does not overlap a sealed portion of the case (100).

11. The method according to claim 10, wherein a thickness of the protective film (500) is equal to or greater than a height of a bead created during welding.

12. The method according to claim 9, wherein
the hot pressing of the protective film (500) in the fourth step is performed by sequentially performing a primary hot pressing and a secondary hot pressing, and
a heating temperature during the secondary hot pressing is higher than a heating temperature during the primary hot pressing.

13. The method according to claim 12, wherein the heating temperature during the secondary hot pressing is from 100°C to 145°C.

14. A battery module comprising the pouch-shaped secondary battery according to any one of claims 1 to 7.

## Patentansprüche

1. Beutelförmige Sekundärbatterie, umfassend:
ein Gehäuse (100), welches dazu eingerichtet ist, eine Laminatfolienstruktur aufzuweisen;
eine Elektrodenanordnung (200), welche in dem Gehäuse (100) aufgenommen ist;
eine Elektronenlasche (300), welche sich von der Elektrodenanordnung (200) erstreckt;
eine Elektrodenleitung (400), welche eine Seite, welche mit der Elektrodenlasche (300) verbunden ist, und eine andere Seite aufweist, welche aus dem Gehäuse (100) vorsteht; und
einen schützenden Film (500), welcher an einer oberen Fläche an einer unteren Fläche einer Schweißung (W) der Elektrodenlasche (300) und der Elektrodenleitung (400) angeordnet ist,
**dadurch gekennzeichnet, dass** der schützende Film (500) umfasst:
eine Ethylenvinylacetat-Copolymer-(EVA)-basierte Haftmittelschicht (520), welche in engem Kontakt mit der Fläche der Schweißung (W) angeordnet ist; und
eine Trägerschicht (510), welche an einer Fläche der Haftmittelschicht (520) angeordnet ist, wobei die Trägerschicht (510) aus wenigstens einem aus Polypropylen (PP), Cast Polypropylen (CPP) oder Polyethylenterephthalat (PET) hergestellt ist.

2. Beutelförmige Sekundärbatterie nach Anspruch 1, wobei die Trägerschicht (510) aus Cast Polypropylen (CPP) hergestellt ist.

3. Beutelförmige Sekundärbatterie nach Anspruch 1, wobei die Trägerschicht (510) aus Polyethylenterephthalat (PET) hergestellt ist

4. Beutelförmige Sekundärbatterie nach Anspruch 2, wobei der schützende Film (500) die Schweißung (W) vollständig umhüllt, während er in einem inneren Raum angeordnet ist, welcher einen abgedichteten Abschnitt des Gehäuses (100) nicht überlagert.

5. Beutelförmige Sekundärbatterie nach Anspruch 4, wobei eine Dicke des schützenden Films (500) gleich wie oder größer als eine Höhe einer Wulst ist, welche während eines Schweißens erzeugt wird.

6. Beutelförmige Sekundärbatterie nach Anspruch 2, wobei der schützende Film (500) in einem Paar bereitgestellt ist, um an jeder aus einer Fläche und einer anderen Fläche der Schweißung (W) angeordnet zu sein.

7. Beutelförmige Sekundärbatterie nach Anspruch 2, wobei der schützende Film (500) als ein einzelnes Element gebogen bereitgestellt ist, um eine Fläche und eine andere Fläche der Schweißung (W) zu umhüllen.

8. Verfahren zum Herstellen einer beutelförmigen Sekundärbatterie, umfassend:
einen ersten Schritt eines Vorbereitens einer Elektrodenanordnung (200);
einen zweiten Schritt eines Schweißens einer Elektrodenlasche (300), welche sich von der Elektrodenanordnung (200) erstreckt und einer Elektrodenleitung (400) miteinander;
einen dritten Schritt eines Anordnens eines schützenden Films (500), um eine Schweißung (W) der Elektrodenlasche (300) und der Elektrodenleitung (400) abzudecken;
einen vierten Schritt eines Heißpressens des schützenden Films (500);
einen fünften Schritt eines Aufnehmens der Elektrodenanordnung (200) in einem Gehäuse (100); und
einen sechsten Schritt eines Abdichtens eines Rands des Gehäuses (100), wobei
der schützende Film (500) umfasst:
eine Ethylenvinylacetat-Copolymer-(EVA)-basierte Haftmittelschicht (520), welche in engem Kontakt mit einer Fläche der Schweißung (W) angeordnet ist; und
eine Trägerschicht (510), welche an einer Fläche der Haftmittelschicht (520) angeordnet ist, wobei die Trägerschicht (510) aus wenigstens einem aus Polypropylen (PP), Cast Polypropylen (CPP) oder Polyethylenterephthalat (PET) hergestellt ist.

9. Verfahren nach Anspruch 8, wobei die Trägerschicht (510) aus Cast Polypropylen (CPP) hergestellt ist.

10. Verfahren nach Anspruch 9, wobei
in dem dritten Schritt, der schützende Film (500) die Schweißung (W) vollständig umhüllt, und
in dem fünften Schritt, der schützende Film (500) in einem inneren Raum angeordnet wird, welcher einen abgedichteten Abschnitt des Gehäuses (100) nicht überlagert.

11. Verfahren nach Anspruch 10, wobei eine Dicke des schützenden Films (500) gleich wie oder größer als eine Höhe einer Wulst ist, welche während eines Schweißens erzeugt wird.

12. Verfahren nach Anspruch 9, wobei
das Heißpressen des schützenden Films (500) in dem vierten Schritt durch sequenzielles Durchführen eines primären Heißpressens und eines sekundären Heißpressens durchgeführt wird, und
eine Heiztemperatur während des sekundären Heißpressens höher als eine Heiztemperatur während des primären Heißpressens ist.

13. Verfahren nach Anspruch 12, wobei die Heiztemperatur während des sekundären Heißpressens von 100 °C bis 145 °C ist.

14. Batteriemodul, umfassend die beutelförmige Sekundärbatterie nach einem der Ansprüche 1 bis 7.

## Revendications

1. Batterie secondaire en forme de poche comprenant :
un boîtier (100) configuré pour présenter une structure de feuilles stratifiées ;
un ensemble électrode (200) reçu dans le boîtier (100) ;
un onglet d'électrode (300) s'étendant à partir de l'ensemble électrode (200) ;
une languette d'électrode (400) ayant un côté connecté à l'onglet d'électrode (300) et
un autre côté faisant saillie hors du boîtier (100) ; et
un film protecteur (500) situé sur une surface supérieure et une surface inférieure d'une soudure (W) de l'onglet d'électrode (300) et de la languette d'électrode (400),
**caractérisée en ce que** le film protecteur (500) comprend :
une couche adhésive (520) à base de copolymère d'éthylène-acétate de vinyle (EVA) disposée en contact étroit avec la surface de la soudure (W) ; et
une couche de support (510) située sur une surface de la couche adhésive (520), la couche de support (510) étant constituée d'au moins un parmi le polypropylène (PP), le polypropylène moulé (CPP) ou le polyéthylène téréphtalate (PET).

2. Batterie secondaire en forme de poche selon la revendication 1, dans laquelle la couche de support (510) est en polypropylène moulé (CPP).

3. Batterie secondaire en forme de poche selon la revendication 1, dans laquelle la couche de support (510) est en polyéthylène téréphtalate (PET).

4. Batterie secondaire en forme de poche selon la revendication 2, dans laquelle le film protecteur (500) enveloppe complètement la soudure (W) tout en étant situé dans un espace intérieur qui ne chevauche pas une partie scellée du boîtier (100).

5. Batterie secondaire en forme de poche selon la revendication 4, dans laquelle une épaisseur du film protecteur (500) est supérieure ou égale à une hauteur d'un cordon créé pendant le soudage.

6. Batterie secondaire en forme de poche selon la revendication 2, dans laquelle le film protecteur (500) est fourni par paire de manière à être situé sur chacune d'une surface et d'une autre surface de la soudure (W).

7. Batterie secondaire en forme de poche selon la revendication 2, dans laquelle le film protecteur (500) est fourni sous la forme d'un élément unique plié de manière à envelopper une surface et une autre surface de la soudure (W).

8. Procédé de fabrication d'une batterie secondaire en forme de poche, comprenant :
une première étape consistant à préparer un ensemble électrode (200) ;
une deuxième étape consistant à souder un onglet d'électrode (300) s'étendant à partir de l'ensemble électrode (200) et une languette d'électrode (400) l'un à l'autre ;
une troisième étape consistant à placer un film protecteur (500) pour recouvrir une soudure (W) de l'onglet d'électrode (300) et de la languette d'électrode (400) ;
une quatrième étape consistant à presser à chaud le film protecteur (500) ;
une cinquième étape consistant à recevoir l'ensemble électrode (200) dans un boîtier (100) ; et
une sixième étape consistant à sceller un bord du boîtier (100), dans lequel le film protecteur (500) comprend :
une couche adhésive (520) à base de copolymère d'éthylène-acétate de vinyle (EVA) disposée en contact étroit avec une surface de la soudure (W) ; et
une couche de support (510) située sur une surface de la couche adhésive (520), la couche de support étant constituée d'au moins un parmi le polypropylène (PP), le polypropylène moulé (CPP) ou le polyéthylène téréphtalate (PET).

9. Procédé selon la revendication 8, dans lequel la couche de support (510) est en polypropylène moulé (CPP).

10. Procédé selon la revendication 9 dans lequel
dans la troisième étape, le film protecteur (500) enveloppe complètement la soudure (W), et
dans la cinquième étape, le film protecteur (500) est situé dans un espace intérieur qui ne chevauche pas une partie scellée du boîtier (100).

11. Procédé selon la revendication 10, dans lequel une épaisseur du film protecteur (500) est supérieure ou égale à une hauteur d'un cordon créé pendant le soudage.

12. Procédé selon la revendication 9 dans lequel
le pressage à chaud du film protecteur (500) dans la quatrième étape est réalisé en réalisant séquentiellement un pressage à chaud primaire et un pressage à chaud secondaire, et
une température de chauffage pendant le pressage à chaud secondaire est supérieure à une température de chauffage pendant le pressage à chaud primaire.

13. Procédé selon la revendication 12, dans lequel la température de chauffage pendant le pressage à chaud secondaire est de 100 °C à 145 °C.

14. Module de batterie comprenant la batterie secondaire en forme de poche selon l'une quelconque des revendications 1 à 7.
